# EUROPEAN PATENT SPECIFICATION

(11) **EP 3 171 090 B1**
(45) Date of publication and mention of the grant of the patent: **02.01.2019**
(21) Application number: 16199705.1
(22) Date of filing: 18.11.2016
(51) Int. Cl.: F24D 3/10, F24D 12/02, F24D 19/10

(54) **MULTISOURCE THERMAL SYSTEM**
WÄRMESYSTEM MIT MEHREREN QUELLEN
SYSTÈME THERMIQUE MULTISOURCE

(30) Priority: 19.11.2015 IT UB20155751
(43) Date of publication of application: 24.05.2017
(73) Proprietor: Riello S.p.A., 37045 Legnago (IT)
(72) Inventor: CASIRAGHI, Stefano, 23875 Osnago (IT); CIOFOLO, Noè, 23816 Barzio (IT)
(74) Representative: Andreotti, Erika

(56) References cited:
- EP-A1- 2 863 131
- DE-U1-202010 016 095
- FR-A1- 2 455 700

## Description

The present invention relates to a multisource thermal system.

In particular, the present invention relates to a multisource thermal system designed for conditioning the domestic environment and/or for heating sanitary water. Thermal systems provided with a plurality of thermal sources designed to heat the water supplying a circuit for heating the domestic environment and/or a circuit for heating sanitary water are already known. Examples are disclosed in documents EP2863131, which is considered to disclose the preamble of claim 1, DE202010016095 and FR 2455700.

The management of the heated water is usually entrusted to a complex circuit provided with flow rate regulating systems (valves, calibrated bottlenecks, etc.) and water circulation systems (electric pumps, circulators, etc.).

It is therefore an object of the present invention to provide a multisource thermal system having a simplified structure allowing a reduction in the manufacturing costs and in the installation time.

In accordance with these purposes, the present invention relates to a multisource thermal system according to claim 1.

Advantageously, the thermal system according to the present invention comprises only one valve providing the selective connection of the sources to the thermal exchange plant.

In particular, the valve can connect only the first source or only the second source to the thermal exchange plant or can connect both sources in series to the thermal exchange plant.

In this way, the structure of the thermal system is simplified. Thanks to this, the manufacturing costs and the installation times are reduced with respect to those required for the thermal systems known so far.

Moreover, the structure of the system according to the present invention allows the use of only one pump for the circulation of the fluid.

According to the invention, the switch valve comprises a fixed outer element extending along a main axis and an inner element movable inside the outer element; the outer element and the inner element being provided respectively with a plurality of outer openings and with a plurality of inner openings. In this way, the switch valve has a structure that is easy and inexpensive to manufacture. According to the invention, the inner element of the switch valve comprises at least a septum to divide a first chamber and a second chamber, not directly communicating. In this way, the switch valve can independently regulate at least two flows.

According to the invention, the septum intersects transversally the main axis. In this way, the septum may also help guide the flow within the inner element in the wished direction. In other words allows for high flexibility and sorting between different sources simply by rotating the second element with respect to the first element

According to a preferred embodiment, at least some of the outer openings of the outer element are connected, respectively, to the first thermal source, to the second thermal source and to the first thermal exchange plant. In this way, the switch valve is directly connected to the first source, to the second source and to the thermal exchange plant.

According to a preferred embodiment, the inner openings of the inner element are arranged so that the relative movement between the outer element and the inner element selectively determines an alignment between some outer openings of the outer element and respective inner openings of the inner element. In this way, the movement of the inner element determines the selective opening or closing of the outer openings of the outer element.

According to a preferred embodiment, the inner element is rotatable about the principal axis. In this way, the relative movement between the inner element and the outer element is easily controllable. The rotary movement of the inner element, in fact, determines the selective alignment between some outer openings of the outer element and relative inner openings of the inner element.

According to a preferred embodiment, the inner element is moved by an angular motor connected to a control device. In this way, the control device regulates the movement of the inner element for determining which and how many thermal sources must be associated with the thermal exchange plant. According to a preferred embodiment, the system comprises a second thermal exchange plant; the switch valve being designed to selectively connect in series the first thermal source and/or the second thermal source to the first thermal exchange plant or to the second thermal exchange plant.

In this way, the switch valve can provide for the selective connection of the sources to one of the thermal exchange plants. Advantageously, the thus composed thermal system has a simplified structure, thanks to which the installation time and the cost are reduced with respect to those required for thermal systems known so far.

Moreover, the management of the thermal sources and of the thermal exchange plants is centralised and regulated through only one switch valve.

Furthermore, the structure of the system according to the present invention allows the use of only one pump for circulating the fluid, although the system includes more than one thermal exchange plant to be supplied.

Further characteristics and advantages of the present invention will become apparent from the following description of a non-limiting embodiment with reference to the figures of the accompanying drawings, wherein:
- Figures 1-3 are a schematic representation of the multisource thermal system according to the present invention in three different operating positions;
- Figure 4 is a schematic representation of the multisource thermal system according to a second embodiment of the present invention in an operating position.

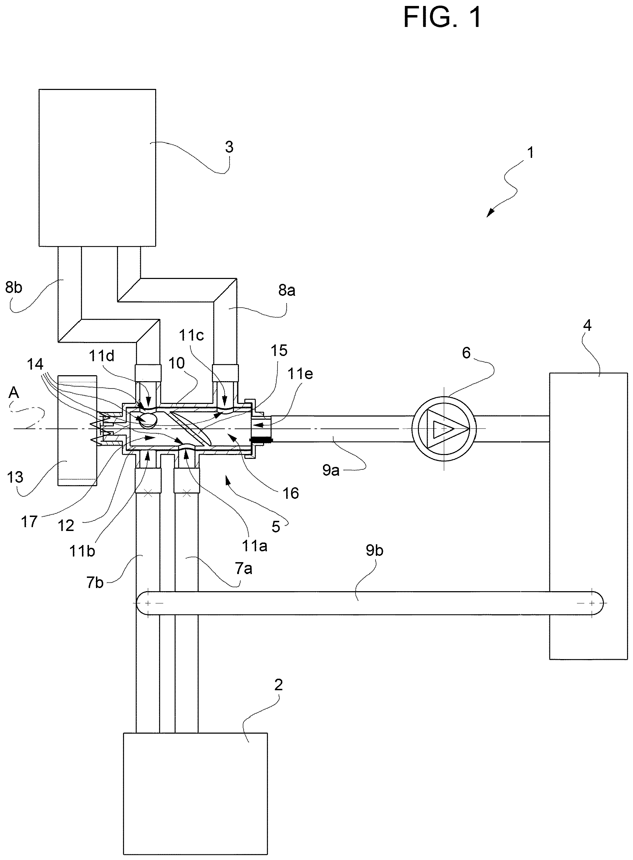

Figure 1 indicates with the reference number 1 a multisource thermal system according to the present invention.

The thermal system 1 is defined by a circuit in which circulates a heat exchange fluid, preferably water.

The thermal system 1 comprises a first thermal source 2, a second thermal source 3, a thermal exchange plant 4, a switch valve 5 and a pump 6.

The first thermal source 2 is connected to the switch valve 5 by means of a delivery duct 7a and of a return duct 7b. In the non-limiting example here described and shown, the first thermal source 2 is a renewable source, for example a heat pump.

Preferably, the heat pump 2 is designed for selectively heating or cooling the fluid circulating in the thermal system 1.

The second thermal source 3 is connected to the switch valve 5 by means of a delivery duct 8a and of a return duct 8b.

In the non-limiting example here described and shown, the second thermal source 3 is a boiler, preferably a fossil fuel boiler, e.g. a gas boiler.

In the non-limiting example here described and shown, the thermal exchange plant 4 is an air conditioning plant.

A variant not shown provides that the thermal exchange plant 4 is a sanitary water heating plant.

The thermal exchange plant 4 is connected to the switch valve 5 by means of a delivery duct 9a and of a return duct 9b. In the non-limiting example here described and shown, the return duct 9b is not connected directly to the switch valve 5, but flows into the return duct 7b of the first thermal source 2.

The switch valve 5 is a valve designed for selectively connecting in series the first thermal source 2 and/or the second thermal source 3 and the thermal exchange plant 4. In particular, the switch valve 5 is designed for selectively connecting in series the first thermal source 2 and/or the second thermal source 3 and the thermal exchange plant 4 without any additional flow-regulating element.

In particular, the switch valve 5 comprises a fixed outer element 10, which extends along a main axis A and is provided with a plurality of openings 11 respectively connected to the first thermal source 2, to the second thermal source 3 and to the first thermal exchange plant 4. In particular, the outer element 10 is provided with an opening 11a connected to the delivery duct 7a, with an opening 11b connected to the return duct 7b, with an opening 11c connected to the delivery duct 8a, with an opening 11d connected to the return duct 8b and with an opening 11e connected to the delivery duct 9a.

The openings 11 are arranged so that the coupling portions of the ducts 7a 7b 8a 8b 9a connected thereto are substantially coplanar. The expression "coplanar coupling portions" means that the axes of the coupling portions of the ducts 7a, 7b, 8a, 8b, 9a, 9b lie on a same plane.

In this way, the delivery duct 7a, the return duct 7b, the delivery duct 8a, the return duct 8b and the delivery duct 9a are connected to the switch valve 5 so as to reduce the overall dimensions to a minimum and to compact the system structure as much as possible.

Preferably, the openings 11 are holes provided with respective axes. The axes of the holes 11 preferably lie on a same plane.

The switch valve 5 also comprises an inner element 12 movable inside the outer element 10.

The outer element 10 and the inner element 12 are hollow bodies.

In the non-limiting example here described and shown, the outer element 10 and the inner element 12 are hollow coaxial cylinders.

A variant not shown provides that the outer element 10 and the inner element 12 have the shape of a truncated cone and are coaxial.

A further variant provides that the outer element 10 and the inner element 12 have a conical shape and are coaxial. The inner element 12 is rotatable about the axis A.

In particular, the switch valve 5 is provided with an angular motor 13, which moves the inner element 12.

Preferably, the angular motor 13 is regulated by a control device (not shown in the attached figures). For example, the control device can regulate the position of the inner element 12 based on the needs of the thermal exchange plant 4 and/or on the availability and the efficiency of the thermal sources connected to the switch valve 5.

The inner element 12 is provided with a plurality of openings 14 arranged so that the relative movement between the outer element 10 and the inner element 12 selectively determines an alignment between some openings 11 of the outer element and respective openings 14 of the inner element 12.

The inner element 12 is also provided with a septum 15 dividing the inner element 12 in a first chamber 16 and a in a second chamber 17, not directly communicating.

The septum 15 is transversal to the main axis A. According to the invention, the septum 15 intersects the main axis A.

In particular, the septum 15 has a peripheral edge coupled, for its entire length, to the inner face of the inner element 12.

In the non-limiting example here described and shown, the septum 15 is inclined at an angle of about 43° with respect to a plane perpendicular to the main axis A.

In the non-limiting example described and shown in the Figures 1-3, the inner element 12 is movable between three angular positions, offset by 120°.

In the first angular position shown in Figure 1, the switch valve 5 connects in series the first source 2, the second source 3 and the thermal exchange plant 4. This position is useful, for example, when the heating action of the first thermal source 2 is not sufficient to meet the needs of the plant 4. The fluid heated by the first thermal source 2 is conveyed into the second chamber 17 and fed to the second thermal source 3, where it is further heated and conveyed into the first chamber 16 and subsequently fed to the thermal exchange plant 4 by means of the pump 6.

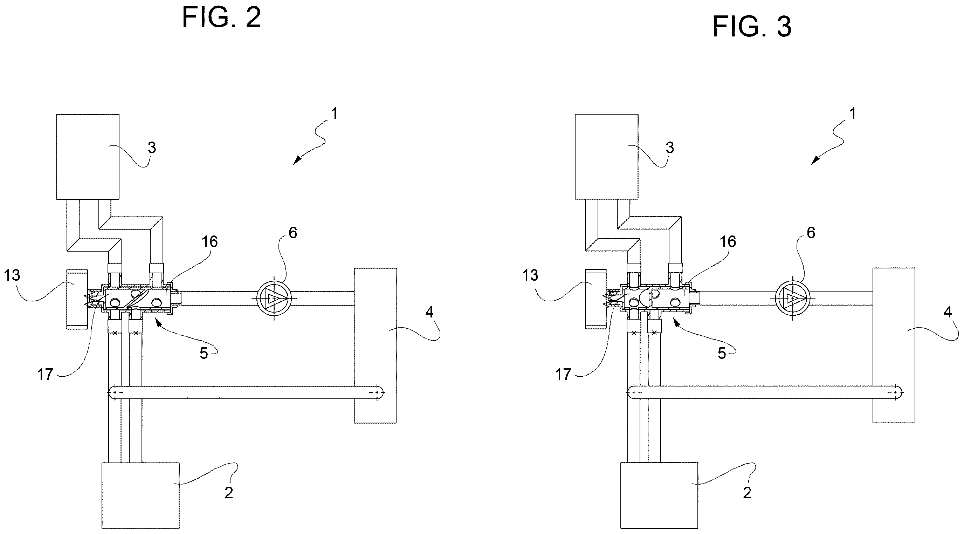

In the second angular position shown in Figure 2, the switch valve 5 connects in series the first thermal source 2 and the thermal exchange plant 4. This position is useful, for example, when the heating action of the first thermal source 2 is sufficient to meet the needs of the plant 4. The fluid heated by the first thermal source 2 is conveyed into the first chamber 16 and fed to the thermal exchange plant 4 by means of the pump 6.

In the third angular position shown in Figure 3, the switch valve 5 connects in series the second thermal source 3 and the thermal exchange plant 4. This position is useful, for example, when the heating action of the second thermal source 2 is sufficient to meet the needs of the plant 4. The fluid heated by the second thermal source 3 is conveyed into the first chamber 16 and fed to the thermal exchange plant 4 by means of the pump 6.

Advantageously, the system 1 employs only one pump 6 that provides to send the fluid from the switch valve 5 to the thermal exchange plant 4.

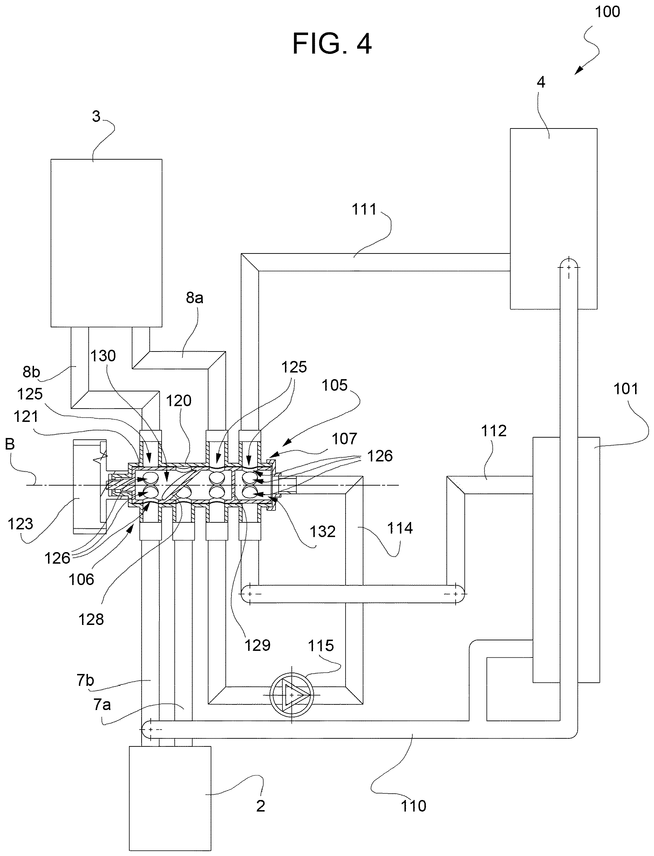

Figure 4 shows a thermal system 100 in accordance with a second embodiment of the present invention.

The thermal system 100 differs from the thermal system 1 mainly due to the presence of a second thermal exchange plant 101.

In the following, the same reference numbers previously used for the description of the thermal system 1 indicate parts that are substantially identical in the thermal system 100.

The presence of a second thermal exchange plant 101 has caused a variation of the circuit of the thermal system and a variation of the structure of the switch valve 105, which has some differences with respect to the switch valve 5 described for the thermal system 1.

The switch valve 105 is designed to selectively connect in series the first thermal source 2 and/or the second thermal source 3 to the first thermal exchange plant 4 or to the second thermal exchange plant 101.

The switch valve 105 comprises a first module 106, connected to the first thermal source 2 and to the second thermal source 3 and to a return duct 110 that collects the return fluid from the first thermal exchange plant 4 and/or from the second thermal exchange plant 101, and a second module 107 connected through a delivery duct 111 to the first thermal exchange plant 4 and through a delivery duct 112 to the second thermal exchange plant 101.

The first module 106 and the second module 107 are connected by means of a connecting duct 114 provided with a pump 115.

Preferably, the first module 106 and the second module 107 are integrated.

In particular, the first module 106 and the second module 107 are defined by a fixed outer element 120 extending around a main axis B and by an inner element 121 movable inside the outer element 120.

The outer element 120 and the inner element 121 are hollow bodies.

The inner element 121 is rotatable about the axis B.

In particular, the switch valve 105 is provided with an angular motor 123, which moves the inner element 121. Preferably, the angular motor 123 is regulated by a control device (not shown in the attached figures).

For example, the control device can regulate the position of the inner element 121 based on the needs of the thermal exchange plant 4 and of the thermal exchange plant 101 and based on the availability and the efficiency of the thermal sources connected to the switch valve 105.

The outer element 120 is provided with a plurality of openings 125 connected to the delivery duct 8a and to the return duct 8b of the first thermal source 2, to the delivery duct 9a and to the return duct 9b of the second thermal source 4, to the connecting duct 114, to the delivery duct 111 of the first thermal exchange plant 4 and to the delivery duct 112 of the second thermal exchange plant 5.

The openings 125 are arranged so that the coupling portions of the ducts 7a 7b 8a 8b 9A 9B 111 112 114 connected thereto are substantially coplanar. The expression "coplanar coupling portions" means that the axes of the coupling portions of the ducts 7a 7b 8a 8b 9A 9B 111 112 114 lie on a same plane.

In this way, the delivery duct 8a, the return duct 8b, the delivery duct 9a, the return duct 9b, the connecting duct 114, the delivery duct 111, the delivery duct 112, are connected to the switch valve 105 so as to reduce the overall dimensions to a minimum and to compact the system structure as much as possible.

Preferably, the openings 125 are holes provided with respective axes. The axes of the holes 125 preferably lie on a same plane.

The inner element 121 is provided with a plurality of inner openings 126 arranged so that the relative movement between the outer element 120 and the inner element 121 selectively determines an alignment between some outer openings 125 of the outer element 120 and respective inner openings 126 of the inner element 121.

The inner element 121 is also provided with a first septum 128 and with a second septum 129 dividing the inner element 121 in a first chamber 130, a second chamber 131 and a third chamber 132.

The second chamber 131 and the third chamber 132 are connected by the connecting duct 114.

Preferably, the first septum 128 and second septum 129 are transversal to the main axis B.

In particular, the first septum 128 and the second septum 129 intersect the main axis B.

In particular, the first septum 128 and the second septum 129 are provided with respective peripheral edges coupled, for their entire length, to the inner face of the inner element 121.

In the non-limiting example here described and shown, the first septum 128 is inclined at an angle of about 43° with respect to a plane perpendicular to the main axis B and the second septum 129 is orthogonal to the main axis B.

In the non-limiting example here described and shown, the inner element 121 is movable between six angular positions, offset by 60°.

The following table describes all the angular positions taken by the switch valve 105.

In the table, the number 1 indicates that the opening 125 on the delivery duct of the element indicated in the column is open, while the number 0 indicates that the opening 125 on the delivery duct of the element indicated in column is closed.

| Position | First source | Second source | First thermal exchange plant | Second thermal exchange plant |
|---|---|---|---|---|
| 30° | 1 | 0 | 1 | 0 |
| 90° | 0 | 1 | 1 | 0 |
| 150° | 1 | 1 | 1 | 0 |
| 210° | 1 | 1 | 0 | 1 |
| 270° | 0 | 1 | 0 | 1 |
| 330° | 1 | 0 | 0 | 1 |

Substantially, in the 30° position the first source 1 is connected in series to the first thermal exchange plant 4. In the 90° position, the second source is connected in series to the first thermal exchange plant 4.

In the 150° position, the first source 2 and the second source 3 are connected in series to the first thermal exchange plant 4.

In the 210° position, the first source 2 and the second source 3 are connected in series to the second thermal exchange plant 101.

In the 270° position, the second source 3 is connected in series to the second thermal exchange plant 101.

In the 330° position (shown in Figure 4), the first source 2 is connected in series to the second thermal exchange plant 101.

In the non-limiting example here described and shown, the first thermal exchange plant 4 is an air conditioning plant, while the second thermal exchange plant 101 is a sanitary water heating plant.

Advantageously, also the system 100 employs only one pump 115, although the system 100 comprises more than one thermal exchange plant to be fed with the fluid coming from the thermal sources.

Finally, it is evident that the multisource thermal system here described may be subject to modifications and variations without departing from the scope of the appended claims.

## Claims

1. Multisource thermal system comprising:
- a first thermal source (2);
- at least a second thermal source (3);
- at least a first thermal exchange plant (4; 101);
- a switch valve (5; 105) designed to selectively connect in series the first thermal source (2) and/or the second thermal source (3) and at least the first thermal exchange plant (4; 101); wherein the switch valve (5; 105) comprises a fixed outer element (10; 120) extending along a main axis (A; B) and an inner element (12; 121) movable inside the outer element (10; 120); the outer element (10; 120) and the inner element (12; 121) being respectively provided with a plurality of outer openings (11; 125) and with a plurality of inner openings (14; 126) ;
the system being **characterized by** the fact that the inner element (12; 121) comprises at least one septum (15; 128, 129) designed to define a first chamber (16; 130) and a second chamber (17; 131), not directly communicating; wherein the septum (15; 128, 129) intersects transversally the main axis (A; B).

2. A thermal system according to claim 1, wherein at least some of the outer openings (11; 125) of the outer element (10; 120) are connected respectively to the first thermal source (2), to the second thermal source (3) and to the first thermal exchange plant (4).

3. A thermal system according to any one of the foregoing claims, wherein the inner openings (14; 126) of the inner element are arranged so as the relative movement between the outer element (10; 120) and the inner element (12; 121) selectively aligns some of the outer openings (11; 125) of the outer element (10; 120) with respective inner openings (14; 126) of the inner element (12; 121).

4. A thermal system according to any one of the foregoing claims, wherein the inner element (12; 121) is rotatable about the main axis (A; B).

5. A thermal system according to any one of the foregoing claims, wherein the outer element (10; 120) and the inner element (12; 121) are coaxial cylinders.

6. A thermal system according to any one of the foregoing claims, wherein the inner element (12; 121) and the outer element (10; 120) are truncated cone shaped and coaxial.

7. A thermal system according to any one of claims from 4 to 6, comprising an angular motor (13; 123) configured to move the inner element (12; 121).

8. A thermal system according to claim 7, comprising a control device configured to regulate the angular motor (13; 123).

9. A thermal system according to any one of the preceding claims, comprising only one pump (6), which is arranged between the switch valve (5) and the first thermal exchange plant (4) for supplying to the first thermal exchange plant (4) the fluid coming from the switch valve (5) .

10. A thermal system according to any one of claims from 1 to 8, comprising a second thermal exchange plant (101); the switch valve (105) being designed to selectively connect in series the first thermal source (2) and/or the second thermal source (3) to the first thermal exchange plant (4) or to the second thermal exchange plant (101).

11. A thermal system according to claim 10, wherein the switch valve (105) comprises a first module (106) and a second module (107) coupled by a connecting duct (114).

12. A thermal system according to claim 11, comprising only one pump (115), which is arranged along the connecting duct (114).

13. A thermal system according to any one of the preceding claims, wherein the first thermal source (2) is a renewable source.

14. A thermal system according to any one of the preceding claims, wherein the second thermal source (3) is a fossil fuel thermal source.

15. A thermal system according to any one of the preceding claims, wherein the first thermal exchange plant (4) is an air conditioning plant.

16. A thermal system according to any one of claims from 10 to 15, wherein the second thermal exchange plant (101) is a sanitary water heating plant.

## Patentansprüche

1. Wärmesystem mit mehreren Quellen aufweisend:
- eine erste thermische Quelle (2);
- wenigstens eine zweite thermische Quelle (3);
- wenigstens ein erstes thermisches Austauschaggregat (4; 101);
- ein Schaltventil (5; 105), das ausgebildet ist, um die erste thermische Quelle (2) und/oder die zweite thermische Quelle (3) und wenigstens das eine erste thermische Austauschaggregat (4; 101) in Reihe zu schalten; wobei das Schaltventil (5; 105) ein sich entlang einer Hauptachse (A; B) erstreckendes festes äußeres Element (10; 120) und ein innerhalb des äußeren Elements (10; 120) bewegliches inneres Element (12; 121) aufweist; wobei das äußere Element (10; 125) und das innere Element (12; 121) jeweils mit einer Mehrzahl von äußeren Öffnungen (11; 125) und einer Mehrzahl von inneren Öffnungen (14; 126) versehen sind;
wobei das System **dadurch gekennzeichnet ist, dass** das innere Element (12; 121) wenigstens ein Septum (15; 128, 129) aufweist, das derart ausgebildet ist, dass das Septum eine erste Kammer (16; 130) und eine zweite Kammer (17; 131) bildet, die nicht direkt miteinander kommunizieren; wobei das Septum (15; 128; 129) die Hauptachse (A; B) transversal schneidet.

2. Ein thermisches System nach Anspruch 1, wobei wenigstens einige der äußeren Öffnungen (11; 125) des äußeren Elements (10; 120) jeweils mit der ersten thermischen Quelle (2), der zweiten thermischen Quelle (3) und dem ersten thermischen Austauschaggregat (4) verbunden sind.

3. Ein thermisches System nach irgendeinem der vorausgehenden Ansprüche, wobei die inneren Öffnungen (14; 126) des inneren Elements derart angeordnet sind, dass bei einer relativen Bewegung des äußeren Elements (10; 120) und des inneren Elements (12; 121) wahlweise einige der äußeren Öffnungen (11; 125) des äußeren Elements (10; 120) mit entsprechenden inneren Öffnungen (14; 126) des inneren Elements (12; 121) fluchten.

4. Ein thermisches System nach irgendeinem der vorausgehenden Ansprüche, wobei das innere Element (12; 121) um die Hauptachse (A; B) drehbar ist.

5. Ein thermisches System nach irgendeinem der vorausgehenden Ansprüche, wobei das äußere Element (10, 120) und das innere Element (12; 121) koaxiale Zylinder sind.

6. Ein thermisches System nach irgendeinem der vorausgehenden Ansprüche, wobei das innere Element (12; 121) und das äußere Element (10; 120) kegelstumpfförmig und koaxial sind.

7. Ein thermisches System nach irgendeinem der Ansprüche 4 bis 6, aufweisend einen Winkelmotor (13; 123), der zum Bewegen des inneren Elements (12; 121) ausgebildet ist.

8. Ein thermisches System nach Anspruch 7, aufweisend ein Steuergerät, das zum Regulieren des Winkelmotors (13; 123) ausgebildet ist.

9. Ein thermisches System nach irgendeinem der vorausgehenden Ansprüche, aufweisend nur eine Pumpe (6), die zwischen dem Schaltventil (5) und dem ersten thermischen Austauschaggregat (4) zur Versorgung der ersten thermischen Austauscheinheit (4) mit dem von dem Schaltventil (5) kommenden Fluid angeordnet ist.

10. Ein thermisches System nach irgendeinem der Ansprüche 1 bis 8, aufweisend ein zweites thermisches Austauschaggregat (101); wobei das Schaltventil (105) derart ausgebildet ist, dass das Schaltventil wahlweise die erste thermische Quelle (2) und/oder die zweite thermische Quelle (3) mit dem ersten thermischen Austauschaggregat (4) oder dem zweiten thermischen Austauschaggregat (101) in Reihe schaltet.

11. Ein thermisches System nach Anspruch 10, wobei das Schaltventil (105) ein erstes Modul (106) und ein zweites Modul (107) aufweist, die durch eine Verbindungsleitung (114) miteinander verbunden sind.

12. Ein thermisches System nach Anspruch 11, aufweisend nur eine Pumpe (115), die entlang der Verbindungsleitung (114) angeordnet ist.

13. Ein thermisches System nach irgendeinem der vorausgehenden Ansprüche, wobei die zweite thermische Quelle (3) eine erneuerbare Energiequelle ist.

14. Ein thermisches System nach irgendeinem der vorausgehenden Ansprüche, wobei die zweite thermische Quelle (3) eine fossile thermische Brennstoffquelle ist.

15. Ein thermisches System nach irgendeinem der vorausgehenden Ansprüche, wobei das erste thermische Austauschaggregat (4) eine Klimaanlage ist.

16. Ein thermisches System nach irgendeinem der Ansprüche 10 bis 15, wobei das zweite thermische Austauschaggregat (101) eine Trinkwassererwärmungsanlage ist.

## Revendications

1. Système thermique multisource comprenant :
- une première source thermique (2) ;
- au moins une deuxième source thermique (3) ;
- au moins une première installation d'échange thermique (4 ; 101) ;
- une vanne de commutation (5 ; 105) conçue pour relier de manière sélective en série la première source thermique (2) et/ou la deuxième source thermique (3) et au moins la première installation d'échange thermique (4 ; 101) ; dans lequel la vanne de commutation (5 ; 105) comprend un élément extérieur fixe (10 ; 120) s'étendant le long d'un axe principal (A ; B) et un élément intérieur (12 ; 121) mobile à l'intérieur de l'élément extérieur (10 ; 120) ; l'élément extérieur (10 ; 120) et l'élément intérieur (12 ; 121) étant respectivement pourvus d'une pluralité d'ouvertures extérieures (11 ; 125) et d'une pluralité d'ouvertures intérieures (14 ; 126) ;
le système étant **caractérisé par le fait que** l'élément intérieur (12 ; 121) comprend au moins une cloison (15 ; 128, 129) conçue pour définir une première chambre (16 ; 130) et une deuxième chambre (17 ; 131), ne communiquant pas directement ; dans lequel la cloison (15 ; 128, 129) croise transversalement l'axe principal (A ; B).

2. Système thermique selon la revendication 1, dans lequel au moins certaines des ouvertures extérieures (11 ; 125) de l'élément extérieur (10 ; 120) sont respectivement reliées à la première source thermique (2), à la deuxième source thermique (3) et à la première installation d'échange thermique (4).

3. Système thermique selon l'une quelconque des revendications précédentes, dans lequel les ouvertures intérieures (14 ; 126) de l'élément intérieur sont agencées de sorte que le mouvement relatif entre l'élément extérieur (10 ; 120) et l'élément intérieur (12 ; 121) aligne de manière sélective certaines des ouvertures extérieures (11 ; 125) de l'élément extérieur (10 ; 120) avec des ouvertures intérieures (14 ; 126) respectives de l'élément intérieur (12 ; 121) .

4. Système thermique selon l'une quelconque des revendications précédentes, dans lequel l'élément intérieur (12 ; 121) est capable de tourner autour de l'axe principal (A ; B).

5. Système thermique selon l'une quelconque des revendications précédentes, dans lequel l'élément extérieur (10 ; 120) et l'élément intérieur (12 ; 121) sont des cylindres coaxiaux.

6. Système thermique selon l'une quelconque des revendications précédentes, dans lequel l'élément intérieur (12 ; 121) et l'élément extérieur (10 ; 120) sont en forme de cône tronqué et coaxiaux.

7. Système thermique selon l'une quelconque des revendications 4 à 6, comprenant un moteur angulaire (13 ; 123) configuré pour déplacer l'élément intérieur (12 ; 121).

8. Système thermique selon la revendication 7, comprenant un dispositif de commande configuré pour réguler le moteur angulaire (13 ; 123).

9. Système thermique selon l'une quelconque des revendications précédentes, ne comprenant qu'une seule pompe (6), qui est agencée entre la vanne de commutation (5) et la première installation d'échange thermique (4) pour fournir, à la première installation d'échange thermique (4), le fluide provenant de la vanne de commutation (5).

10. Système thermique selon l'une quelconque des revendications 1 à 8, comprenant une deuxième installation d'échange thermique (101) ; la vanne de commutation (105) étant conçue pour relier de manière sélective en série la première source thermique (2) et/ou la deuxième source thermique (3) à la première installation d'échange thermique (4) ou à la deuxième installation d'échange thermique (101).

11. Système thermique selon la revendication 10, dans lequel la vanne de commutation (105) comprend un premier module (106) et un deuxième module (107) accouplés par un conduit de liaison (114).

12. Système thermique selon la revendication 11, ne comprenant qu'une seule pompe (115), qui est agencée le long du conduit de liaison (114).

13. Système thermique selon l'une quelconque des revendications précédentes, dans lequel la première source thermique (2) est une source d'énergie renouvelable.

14. Système thermique selon l'une quelconque des revendications précédentes, dans lequel la deuxième source thermique (3) est une source thermique à combustible fossile.

15. Système thermique selon l'une quelconque des revendications précédentes, dans lequel la première installation d'échange thermique (4) est une installation de climatisation.

16. Système thermique selon l'une quelconque des revendications 10 à 15, dans lequel la deuxième installation d'échange thermique (101) est une installation de chauffage d'eau sanitaire.
